# EUROPEAN PATENT APPLICATION

(11) **EP 1 308 857 A2**
(43) Date of publication of application: **07.05.2003**
(21) Application number: 02079367.5
(22) Date of filing: 21.10.2002
(51) Int. Cl.: G06F 17/30

(54) **Digital data preservation system**

(30) Priority: 02.11.2001 US 407
(71) Applicant: EASTMAN KODAK COMPANY, Rochester, New York 14650 (US)
(72) Inventor: Wong, Victor C., Patent Legal Staff, Rochester, New York 14650-2201 (US); Abhyankar, Vishwas G., Patent Legal Staff, Rochester, New York 14650-2201 (US); Breslawski, Robert, Patent Legal Staff, Rochester, New York 14650-2201 (US); Horvath, Lou S., Patent Legal Staff, Rochester, New York 14650-2201 (US); Jones, Robert S., Patent Legal Staff, Rochester, New York 14650-2201 (US); Narayan, Badhri, Patent Legal Staff, Rochester, New York 14650-2201 (US); Reisch, Robert V., Patent Legal Staff, Rochester, New York 14650-2201 (US); Williams, Donald R., Patent Legal Staff, Rochester, New York 14650-2201 (US); Bayley, Robert B., Patent Legal Staff, Rochester, New York 14650-2201 (US)
(74) Representative: Parent, Yves

(57) **Abstract**

A digital preservation system (10) for accepting a digital data record as input, for writing the data record in human-readable form onto a preservation-quality medium (210), for storage of the medium (210), and for retrieval of the data record from the medium (210). The system (10) is modular, allowing scaling of the system (10), allowing preferential selection of specific image handling components, and allowing replacement of complete subsystems while minimizing the likelihood of data loss. The digital preservation system (10) preserves a data record in human-readable form, along with an associated metadata record, allowing the human-readable preserved data record to be readable in the distant future, independent of specific reading hardware.

## Description

This invention generally relates to long-term preservation of digital data and in particular relates to a system for long-term preservation of digital data on human-readable media.

In order to clarify the scope of the present invention, it is first necessary to distinguish between the terms "data archiving" and "data preservation" as used in this application. Conventional approaches to digital data archiving, also termed digital data storage, use a variety of storage media such as magnetic tape or disk and optical tape or disk media, and may employ techniques such as periodic tape backup, redundant disk storage, and the like. Use of these storage media and techniques provides some level of assurance that a digital data file can be reliably retrieved for at least a few years after it is initially created and stored. In contrast to digital data archiving, digital data preservation is a relatively new concept. Only recently has it become apparent that there is considerable need for workable solutions that allow long-term retention of digital data for periods exceeding those provided by established data archiving methods. Conventional data storage and archiving systems provide limited term solutions that allow reliable retrieval of backed-up digital data for a period of approximately 5-10 years. Data preservation systems, on the other hand, must provide solutions that not only allow retrieval of digital data for much longer periods, but also are capable of allowing usability of the data for periods extending decades or even hundreds of years into the future. This life-span is conditioned in large part by the projected life-span of preservation media, expected to last for hundreds of years when stored under suitable conditions.

In contrast with digital data archiving, digital data preservation offers a number of added advantages. For example, in order to be readable and usable years hence, archived digital data requires some type of migration, such as from one media type to another or from an earlier data format to a later data format. Without migration of some kind, archived data, over time, gradually becomes unreadable and therefore loses its value. In stages, the archived data first becomes unusable, as data formats and application software are revised or replaced. Then, as reading and processing hardware become obsolete, the archived data simply becomes unrecoverable. The task of maintaining archived data through migration can be daunting, requiring, over a period of years, that the archived data be translated from one data format to another or transferred from one storage medium to another. With repeated migration operations, there is increased likelihood of error and of loss of interpretable data. According to some industry estimates, as much as 5% of stored data can be lost during a typical migration operation. Thus, maintaining archived digital data for long periods of time may be costly and labor-intensive and can involve risk of data loss.

In contrast to such well-known difficulties with digital data archiving, digital data preservation would allow digital data to be retrievable in a readable state for many years. Ideally, digital data preservation would eliminate, or at least alleviate, any need for data migration and its concomitant costs and risks. Users of digital data preservation systems would thus enjoy the benefits of minimal risk for data loss or obsolescence, even in the event of severe infrastructure disruption.

Digitally created documents, created using some sort of logic processor and maintained in file form, are often shared among multiple users in digital form, some only rarely being written to paper. Typically, digitally created documents are stored and transferred as files in open data formats, such as TIFF, HTML, JPEG, XML, or .txt, for example. By design, some of these open data formats can be routinely interpreted by software running on a number of different computer platforms. Alternately, other common data formats are designed to be proprietary, interpretable only using specific application software. A goal of digital preservation is to retain the usability and original intention of the data without requiring migration of data format or of data storage mechanisms, allowing files to be certifiably unaltered in their interpreted form, able to be used for purposes such as legal evidence, for example.

In order to have preserved records considered as "certifiably unalterable", so that, for example, such records could even be considered as legal evidence, a preservation system would need to provide "Write-Once/Read-Many-Times/Erase-Once" function. Write-Once capability would disallow alteration of preserved data and unauthorized addition of records to preservation media. Read-Many-Times capability would allow retrieval of preserved data from the media with consistent accuracy. Erase-Once capability would assure complete expungement of specific data records as needed.

Current archiving methods for digital data, allowing access to data only in digital format, have a number of shortcomings. Among problems well known by those skilled in the data archiving arts are aging of equipment, limitations in the useful life of magnetic and optical storage media, and inevitable obsolescence of data formats, particularly where data formats are closely associated with specific hardware or with specific versions of operating systems or programming languages.

Long term preservation of digital data requires both that the original data be faithfully preserved and that this data can be interpreted in some form at any time in the future. This requirement means that the organization that stores the digital data can provide, at some future time, access not only to screen displays, printouts, and other system output, but also to the original data used to generate such output. To achieve this goal, methods for retrieving preserved digital data must be, insofar as is possible, independent of specific equipment. While there may have been various attempts at developing universally accepted data formats for different types of files, few standards have been developed or are likely to be adopted.

Human-readability has not been considered as a meaningful or useful characteristic for data preservation. However, the encoding of data in human-readable form may provide advantages that have been overlooked in any scheme for data encoding and archival. For example, there are baseline advantages for verifying authenticity of a document encoded in human-readable form, and thus for irrefutably validating the fidelity of the document to its original source. Future users of a document would then be assured that a preserved version would be a valid and true copy of an original document.

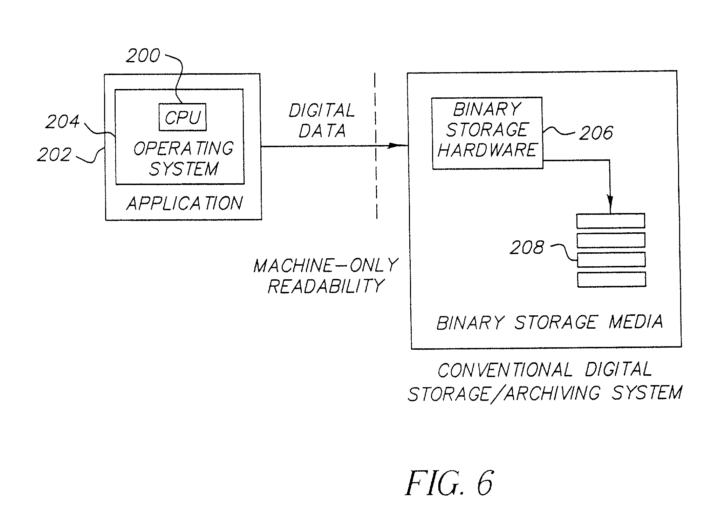

Figure 6 illustrates the conventional approach to digital data archiving. Digital data is processed by a CPU 200 running some type of operating system 204. An application 202, using utilities available from operating system 204, provides digital data output in some binary, machine-readable form. This digital data output is only usable to the originating application 202, or to another software application compatible with application 202. The digital data output has value only when interpreted and presented by application 202 in some form, such as that of a static display of text or images, interactive calculation, web page with dynamic links, or multimedia presentation for example. In the conventional model of Figure 6, a binary storage hardware apparatus 206 stores the digital data output from application 202 onto binary storage media 208, such as magnetic tape, disk, or optical disk. With the arrangement of Figure 6, the archived data is in an application-dependent form and therefore becomes unusable if the originating application 202 or operating system 204 become obsolete. Archived data also becomes unusable as binary storage media 208 degrades over time.

Technology development, by which early systems and software become obsolete, replaced by increasingly more capable tools, is also an important factor for consideration with respect to a digital data preservation system. Anticipated developments in data networking technology, in data interface methods, and in imaging technologies for storage and retrieval are likely to bring about corresponding changes in system hardware, with various components of a system becoming obsolete over time. Inherent to the design of a digital data preservation system solution must be a clear-cut strategy for allowing continuous upgrade, component by component, without jeopardizing the integrity of the preserved digital data.

Analog preservation media, such as microfilm, have been widely used for long-term retention of documents, drawings, and flat ASCII files, where data is encoded visually as black and white images. Among proven benefits of such media are long lifetimes, capability for very high resolution, and inherent human readability. These analog preservation media have traditionally been used in systems employing optical cameras for recording and storing analog data, typically images of documents. With the growing need for retention of computer data, these analog media have also been employed in digital document archiving systems, such as the Document Archive Writer, Model 4800, manufactured by Eastman Kodak Company, Rochester, New York. Other Computer-Output-Microfilm (COM) recording systems have used similar analog media for long-term retention of processed and displayed data, in printout form. It is significant to note that existing systems use these types of analog preservation media solely for storing black and white images of documents that may be output by a typical application 202 (Figure 6). Storage of digital data from application 202 is performed using conventional, magnetic or optical binary storage media 208.

A digital data file for preservation by a digital preservation system can originate from any of a number of sources and could comprise any of a number of types of data. As just a few examples, digital data files could be generated from scanned documents or scanned images, where the original source for the data was prepared or handled manually. Digital data files may comprise encodings of bitonal images, grayscale images, or even color images, such as the halftone separations used in color printing. Digital data files could be computer-generated files, such as spreadsheets, CAD drawings, forms created on-line, Web pages, or computer-generated artwork. Interactive and sensory stimuli such as sound and animation can also be stored as digital data files. Digital data files might even contain computer software, in source code or binary code format. In summary, there can be a need for long-range preservation of any type of digital data file, whether the actual file content is meaningful to an observer, such as when the file contains a document of some kind, or to a computer, such as when the file consists only of encoded computer program instructions.

Preservation of a digital data file typically requires that the data file be packaged in some standard fashion, so that at least some amount of metadata - that is, data about the file itself - can be stored with the data. For example, metadata associated with a CAD file might identify the originating software and revision, date of creation and revision of the data, designer name, departmental and project-related identifiers, delivery or completion date, workflow listing, access permissions levels, and the like. Metadata content can include not only basic information such as file ID and look-up information, but also information that optimizes subsequent data retrieval and interpretation, such as image quality metrics, and media/writer characteristics.

The likely obsolescence of specific data formats over time confounds the problem of data preservation. Depending upon the type of data source and upon factors such as the specific nature of a data file, many data formats can be expected to fade from use, thereby jeopardizing possible recall of data content at some future time. A number of organizations have already encountered this problem, acknowledging that sizable amounts of stored data have become very costly or even impossible to retrieve reliably.

Meanwhile, there have been some promising solutions proposed for providing data in a form that will continue to be readable in the future. One method intended to achieve this goal is the extensible markup language (XML) initiative. XML, document type description (DTD), and XML Schema constructs provide a degree of self-definition, inherently open structure, and computer platform portability and provide tools for data formatting by which definitions of data components can themselves be stored as metadata associated with a data file. However, there has been no attempt thus far to provide solutions using extensible markup languages and techniques that support long-term preservation and retrieval of data.

There have been methods disclosed for storing documents in a machine-readable format that is perceptible to a human observer. PCT application WO 00/28726 discloses storage of a two-dimensional document on a laser-writeable optical storage medium, wherein an image of the document is written onto the media along with the binary data representing the digital record. However, the solution disclosed in application WO 00/28726 is limited to storage of document data, which is merely a subset of the complete set of data types that may need to be preserved. A significant drawback of the PCT application WO 00/28726 system is that it employs conventional, optical storage medium, optical disk or tape written using a laser, thus limiting the lifetime of stored data. Furthermore, the Write-Many-Times characteristic of the system disclosed in PCT application WO 00/28726 makes the system unsuitable for preserving data records that are certifiably unaltered over time. Data written using the system disclosed in PCT application WO 00/28726 may be marginally "human-perceptible" in the sense that the visible effects of marking the optical medium under varying laser intensities could be perceived and interpreted by a human observer trained to interpret the resultant markings as binary 1s and 0s. However, this encoding method is inefficient in providing truly "human-readable" data that would be directly readable using a scanner or could even be read from the media by a human observer. Without intervening hardware, with its incumbent system dependencies, the binary data stored on the optical medium as disclosed in PCT application WO 00/28726 would be extremely difficult to obtain.

Copending, commonly assigned European Patent Application Serial No. 1203996.2, discloses long term preservation methods for document data stored in virtual folders, utilizing an analog medium such as film. As with other solutions, this system does not provide the full set of possible preservation functions for a digital file. Significantly, the method noted in the 1203996.2 application is limited to preserving the image of the document only, with no attempt to preserve the digitally created document data itself nor the metadata associated with the document in human-readable form.

The above-mentioned solutions, focusing narrowly on saving documents and images for a time, have provided only "single point" solutions that are not adequate for addressing the larger data preservation problem. Documents themselves make up only a small subset of digital data that must be preserved. Typical forms of digital data other than documents that may require preservation include grayscale and color pictures and diagnostic images; spreadsheet data; satellite data and other instrumentation readings; audio, video and multimedia presentation data; software; HTML content; and database records, for example. It can be appreciated that preservation and retrieval of this broader base of digital data types requires alternate approaches beyond what may be needed for document preservation. For example, with digital data in this broader category, there may be a greater need for retention and retrieval of other underlying, related data, such as source data associated with or used to generate some part of an image or document.

Conventional archiving solutions have largely been implemented in piecemeal fashion. For example, aware of a need to archive specific documents or images, an organization typically purchases a writer and some form of compatible storage media. With a growing body of archived documents and images, some form of reader is then integrated into the system, possibly along with a printer for reprinting the archived image or document. Some form of record-keeping is maintained in order to track documents stored and to manage revision and disposal cycles. Over time, as different equipment becomes obsolete or as newer equipment becomes available, replacement and implementation of additional components allows growth or upgrade of the conventional system. Typically, a considerable allocation of labor is required in order to work with components of the conventional system for entry of new archival documents and images and for servicing retrieval requests from users of the archival system.

In brief, the conventional archiving system must be designed by its users and assembled and integrated with components from different manufacturers. Strategies for system upgrade, for equipment replacement, for network interconnection, and for handling eventual obsolescence of the format of archived information are largely implemented ad hoc, resulting in considerable concern that such systems will provide their users with future access to valuable archived data.

Another shortcoming of conventional archiving systems relates to the need for complete expungement of data as a useful capability of such a system. For various reasons, it may become necessary for specific data records to be completely deleted from physical storage, such as may be required as a result of a corporate records management directive. Conventional archiving systems do not provide a mechanism for deleting data in a controlled, complete, and systematic manner.

Thus, it can be seen that there is a demand for a digital data preservation system that uses a systematic, modular design approach to allow controlled preservation of digital data in a form that facilitates identification, retrievability, and usability of the preserved data in the distant future.

It is an object of the present invention to provide a system for long-term preservation of a data record, the system comprising:
(a) an input handler for accepting a preservation request to preserve said data record, for accepting input metadata associated with said data record to form a metadata record, and for conversion of said data record and said metadata record to generate a formatted data record;
(b) a data processor for accepting said formatted data record, for generating an index entry corresponding to said formatted data record, and for encoding, from said formatted data record, a print file;
(c) a preservation medium for recording said print file for long-term preservation;
(d) a writer for marking said print file onto said preservation medium to form a human-readable preserved data record;
(e) an indexing database for storing said index entry from said data processor corresponding to said human-readable preserved data record; and
(f) a storage apparatus for safekeeping of said human-readable preserved data record.

A feature of the present invention is that it provides a complete, end-to-end system solution to meet the requirements of digital data preservation. The present invention allows preservation of data in a human-readable form, minimizing dependencies on specific hardware or operating system or application software for data retrieval.

A feature of the present invention is the use of a database, scalable in scope, for maintaining indexing data on human-readable data images.

A feature of the present invention is the capability to preserve a digital data file in multiple formats, including, for example, a visual image, bitmapped image data, and an original input file format.

It is an advantage of the present invention that it provides a modular apparatus for digital data file preservation. This allows substitution of appropriate media and media handling hardware suited to the type of data being stored. It also allows update of equipment and methods to avoid device obsolescence, without loss of data. Modular design also allows scalability, so that a system can be sized appropriately for its customers.

It is a further advantage of the present invention that it allows a method to preserve, with high degree of accuracy and confidence, a verifiably exact copy of a digital data file having data that can itself be retrieved.

It is a further advantage of the present invention that it provides a method for digital data preservation and retrieval wherein the mechanism used for recording and maintaining preserved data records can be kept largely transparent to a customer.

It is a further advantage of the present invention that it allows flexible use of networking in order to make the most efficient use of resources, while maintaining a single system solution.

It is a further advantage of the present invention that it provides long-term preservation of data on a long-lasting preservation medium. The present invention eliminates the cost and risks of data migration with conventional data archival solutions.

It is yet a further advantage of the present invention that it provides a method for preserving, in human-readable form, metadata about a data record, including a method for preserving schema information about the metadata. The present invention uses a markup language that is inherently portable, extensible, and self-defining.

It is yet a further advantage of the present invention that it provides a method for controlled, systematic expungement of a preserved data record, whereby one or more data records can be removed without impact to the integrity of neighboring data records.

These and other objects, features, and advantages of the present invention will become apparent to those skilled in the art upon a reading of the following detailed description when taken in conjunction with the drawings wherein there is shown and described an illustrative embodiment of the invention.

While the specification concludes with claims particularly pointing out and distinctly claiming the subject matter of the present invention, it is believed that the invention will be better understood from the following description when taken in conjunction with the accompanying drawings, wherein:
Figure 1 is a block diagram showing the components of an apparatus of the present invention and their interrelationships;
Figure 2 is a block diagram showing the sequence for preserving images in the system of the present invention;
Figure 3 is a block diagram showing the sequence for retrieving images from the system of the present invention;
Figure 4 shows a portion of an example XML Schema for data preservation;
Figure 5 shows a portion of an example XML file for data preservation;
Figure 6 is a block diagram showing the function of a conventional digital archiving system;
Figure 7 is a block diagram contrasting the function of a digital data preservation system with the function of conventional digital archiving systems; and,
Figures 8a and 8b show a portion of example XML code to illustrate data expungement activity.

The present description is directed in particular to elements forming part of, or cooperating more directly with, apparatus in accordance with the invention. It is to be understood that elements not specifically shown or described may take various forms well known to those skilled in the art.

### Definition of Encoded, Human-readable Data Record

It is instructive to define "human-readable data record" as this terminology is used in the present application. A human-readable data record is a unit of encoded digital data that is visibly recorded on a preservation medium. A human-readable data record may have multiple parts, each part encoded in a different manner. For example, a human-readable data record for a JPEG picture could include the following components:
- JPEG data encoded in human-readable characters, for example, as ASCII characters;
- A rasterized image reproduced on the preservation medium;
- A bit-mapped data file represented in primitive form as binary (1/0) data and encoded on the preservation medium as a visible set of binary characters. Such binary character representation could be is and 0s, dots and spaces, or other visible markings that encode binary data. However, the preferred embodiment employs a Base-64 encoding, widely used for data file transfer on the Internet and familiar to those in the information arts, so that encoded data is represented as a series of ASCII characters.
- Information about the JPEG file, termed metadata, encoded in human-readable characters, for example, as ASCII characters.

Thus, for example, preservation of a JPEG picture in multiple formats preserves the picture in a number of ways, so that picture data, and ultimately the picture itself, could be readily retrieved.

A human-readable data record need not contain image data in the conventional sense of a "visual image." Any type of digital data could be stored, visibly formed on a preservation medium, in a similar manner. Thus, for example, a spreadsheet, an audio file, a multimedia presentation, or even a compiled operating system could be encoded and preserved as a human-readable data record using the system and methods of the present invention.

### Overview of System 10

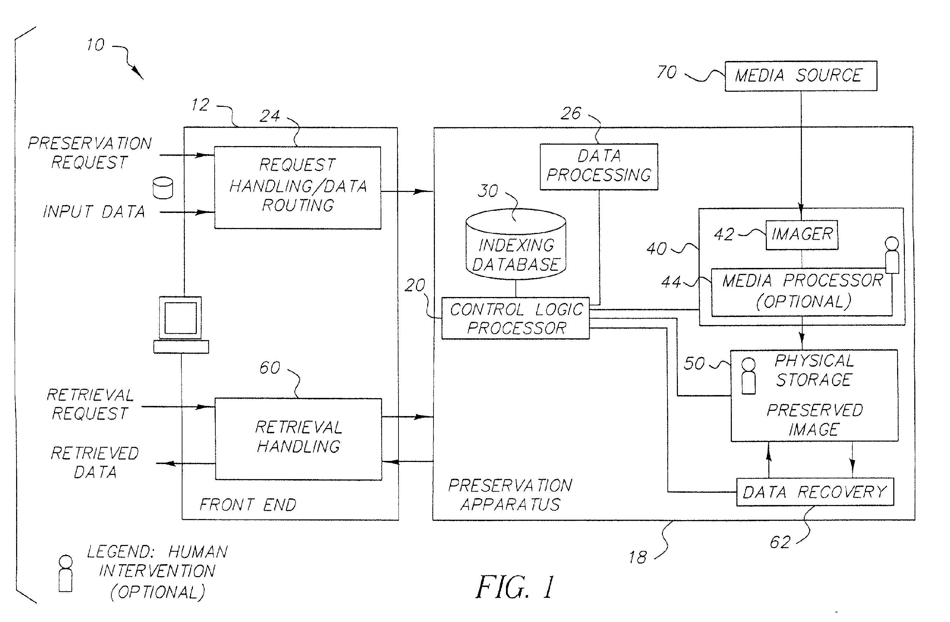

Referring to Figure 1, there is shown a digital preservation system 10 that is configured to accept preservation requests for preserving encoded data records and to accept retrieval requests for providing a copy of an encoded, preserved data record. Modular in design, digital preservation system 10 comprises a number of components, each of which has a preferred embodiment, but permits of a number of optional embodiments. It is instructive to emphasize that the modular design employed in the integration of components allows digital preservation system 10 to be suitably scaled to handle volume demands, makes it possible to offer multiple data preservation options in a single system 10, and provides a high degree of flexibility for growth and component-by-component upgrade.

Referring again to Figure 1, a front end 12, typically implemented using a computer workstation terminal, provides an operator interface for accepting preservation and retrieval requests for encoded data that is managed by a preservation apparatus 18. A request handling/data routing preprocessor 24 acts as an input handler, processing operator requests and, for data preservation requests, accepting input data and information about the input data received by front end 12. For a data preservation request, request handling/data routing preprocessor 24 provides preprocessing for the input data. This preprocessing function may include optimization of the image for suitable reproduction by preservation apparatus 18. A key function of request handling/data routing preprocessor 24 is translating the input data into the standardized format accepted by preservation apparatus 18. Additional functions may include pre-processing required for some types of images. For example, preprocessing may adjust a fine line width within an image where preservation apparatus 18 may not be able to reproduce the original line width. Other specialized image preprocessing functions may enhance brightness, sharpness, or contrast, scale the image, preserve color information, attenuate image noise, or suitably adjust grayscale values to suit the requirements of preservation apparatus 18. Request handling/data routing preprocessor 24 may also perform specialized layout of images in preparation for writing output operation.

It must be noted that preprocessing functions provided by request handling/data routing preprocessor 24 are intended to be "benign" with respect to data record content. That is, preprocessing operations do not change the data contained in the data record. Rather, the preprocessing operations adapt the formatting of this data to suit characteristics of writer 40 and its associated preservation media in preservation apparatus 18.

A secondary function of request handling/data routing preprocessor 24 is to provide a preview function, which is of particular value for images and documents. Request handling/data routing preprocessor 24 generates a preview image that can be made available to an observer at front end 12 or at another sending location. Preview capability provides a visual check on file transfer and conversion operations, enabling operator assessment of any image enhancement operations performed by request handling/data routing preprocessor 24.

After initial preprocessing functions have been completed, request handling/data routing preprocessor 24 then routes the input data and information about the input data to preservation apparatus 18. Preservation apparatus 18 provides a modular component for preservation of data that interacts with front end 12, but, except for an allowed set of interface commands and responses, operates as a "black box" with respect to front end 12. Preservation apparatus 18 contains a data processing element 26 that accepts the records for preservation that have been preprocessed by request handling/data routing preprocessor 24 in front end 12. When it receives a data record for preservation, data processing element 26 makes an entry in an indexing database 30. Data processing element 26 then processes and encodes the input data and its associated metadata to generate the encoded data record for preservation. The metadata may include, for example, information about the input data, the indexing entry, specifications of the encoding format, writer and media characteristics, and other image quality information useful for optimizing data retrieval. Data processing element 26 then transmits this encoded data record to a writer 40. In writer 40, an imager apparatus 42 records the human-readable data record onto a segment of raw media 72 (not shown) from a media source 70. Depending on the type of raw media 72, a media processor 44 may be needed to develop the image for the final encoded data record onto the preservation medium. A physical storage apparatus 50 provides secure housing for maintaining the medium on which the final encoded data record is preserved.

Retrieval requests from an operator are received by a retrieval handling processor 60, part of front end 12. Retrieval handling processor 60 cooperates with a control logic processor 20 and with physical storage apparatus 50 to access the preserved record data in physical storage apparatus 50 and provide the retrieved data to a data recovery processor 62 in preservation apparatus 18. The retrieved encoded, human-readable data record can then be made accessible to the requesting operator in some form. For example, a retrieved encoded data record could be printed on a printer or displayed on a terminal of front end 12. Or, the recovered human-readable data record could be provided as a digital data file, capable of being transferred to a networked computer for further processing. Post-processing operations could be applied by retrieval handling processor 60 as appropriate. For example, image enhancements could be performed to suit the display or printing of the retrieved human-readable data record.

Front end 12 is capable of customization to suit the preservation needs and workflow requirements of each individual user of preservation system 10 and allows flexibility in accepting input data in a suitable format. A standardized tool kit of interface utilities facilitates the customization of front end 12, so that preservation system 10 is adapted to the user environment. In this way, a user has access to the content of preserved data stored in preservation apparatus 18, but does not handle details of operation of preservation apparatus 18. In its internal operation, meanwhile, preservation apparatus 18 has structured components, data transfer formats, and workflow. The operation of preservation apparatus 18 is thereby standardized in order to ensure consistent results that are independent of customer interface differences and specific input data formats. With this arrangement, for example, a single preservation system 10 having a single preservation apparatus 18 could serve multiple users, each using a front end 12 having the appropriate set of interface tools, where the interface tools are customized for each client, for example.

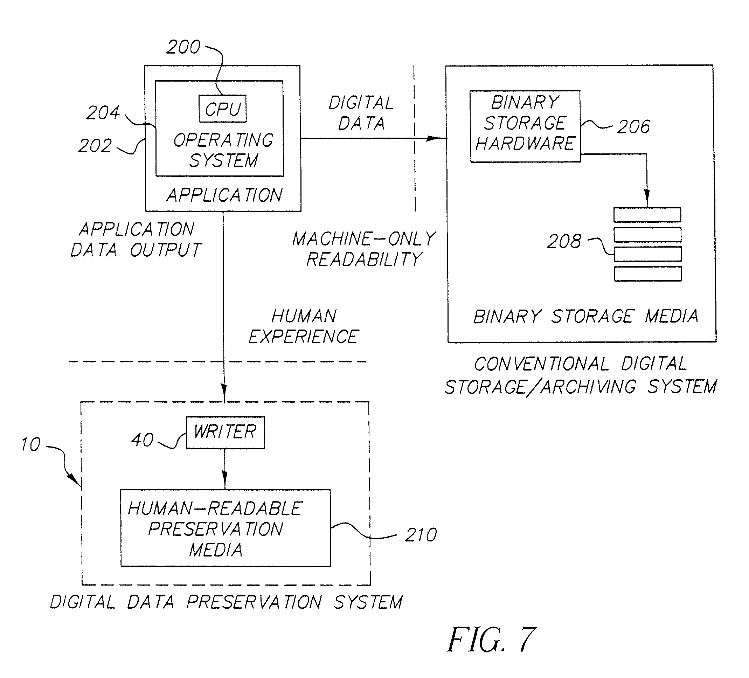

Referring to Figures 6 and 7, there is shown a comparison of digital data preservation system 10 with conventional digital archival systems. Figure 6, described above, shows the function of the conventional archival system. In contrast, Figure 7 shows both digital data preservation system 10 and a conventional digital archival system. With digital data preservation system 10, writer 40 images onto a human readable preservation medium 210. Digital data preservation system 10 stores a human-readable representation of digital data, independent of operating system 204, CPU 200, and application 202 dependencies. Emphasis is placed on preserving both the experiential representation of data output from application 202 and the data and metadata needed to support that representation. The data that is preserved could be visual, audio, tactile, or other sensory data, or could be some other type of output data for human apprehension.

It is instructive to emphasize the distinction between human-readable preservation media 210 and binary storage media 208 as is used by a conventional archiving system. Unlike a data record that is only machine-readable, a human-readable data record can ultimately be interpreted by a human viewer, possibly aided by magnifying optics. Human-readable preservation media 210 are encoded with markings that are visually discernable, typically under magnification. That is, the ability to read standard alphanumeric characters would be considered as the baseline requirement for retrieval of a human-readable data record by a person or by an instrument. Because of this "standalone" characteristic, the human-readable data record is independent of any specific hardware for reading the data record. The human-readable data record is ordinarily encoded in a specific data format; however, a human reader is able to read the encoded data, with the possible aid of magnification.

Examples of suitable human-readable preservation media 210 include microfilm and related film products and other types of medium having similar long-life expectancy and excellent image stability. In addition to film-based media, some other media types that may be acceptable, in some form, for use as human-readable preservation media include the following:
(a) electrophotographic media, when properly treated and finished;
(b) thermal media, such as thermal dye sublimation media;
(c) inkjet media, particularly using plastic film or reflective materials;
(d) metal plate materials, written using methods such as etching and laser ablation;

The materials that are used for human-readable preservation medium 210 are characterized by exceptionally long useful life. Binary storage media 208, on the other hand, include magnetic tapes or disks and optical storage media. Markings on binary storage media 208 are, in general, not readable to the human eye, whether aided or unaided by magnification, and are not suitable for reliable long-term data storage due to their relatively short lifespan and due to hardware and software dependencies for data access from these media. Any change to CPU 200, operating system 204, or application 202 can render data that has been recorded on binary storage media 208 to be unusable. By contrast, data recorded on human-readable preservation media 210 can still be interpreted, regardless of changes to CPU 200, operating system 204, or application 202.

### Data Processing Components

Referring again to Figure 1, the central role of control logic processor 20 within preservation apparatus 18 can be readily appreciated. Control logic processor 20 interacts with a number of other processors, both in preservation apparatus 18 and in front end 12, to control the various stages of data encoding, recording, preservation, and retrieval. The scale of digital preservation system 10 and the locations of the various components of system 10 determine how control logic processor 20 is implemented and likewise how its related data processing element 26, request handling/data routing preprocessor 24 in front end 12, and retrieval handling processor 60 are embodied.

In a preferred embodiment, control logic processor 20 is a computer workstation, such as a high-end Windows NT PC or, alternately, a Unix-based workstation. Front end 12 is a separate, networked computer workstation. A single preservation apparatus 18 is capable of interaction with more than one front end 12, such as over a Local Area Network (LAN) or over the Internet, for example. This allows a flexible arrangement with multiple front end 12 workstations, each workstation able to handle preservation requests and to obtain preserved data from preservation apparatus 18.

It must be noted that, for a smaller digital preservation system 10, a single computer workstation could act as front end 12, performing the functions of request handling/data routing preprocessor 24 as well as those of control logic processor 20. However, there are distinct advantages in separating the functions of networked front end 12 from functions of control logic processor 20 in preservation apparatus 18. Front end 12 can be customized to suit the interface requirements and the workflow of a given customer environment, so that multiple front ends 12 can be networked to a single preservation apparatus 18. Such an arrangement would allow a service bureau, for example, to operate preservation apparatus 18 in order to serve multiple clients, each client equipped with a separate, customized front end 12.

A relatively small set of command functions would allow front end 12 to communicate with preservation apparatus 18 in order to provide data records for preservation and to obtain preserved data records maintained by preservation apparatus 18. By keeping front end 12 distinct from preservation apparatus 18, a customer has the benefit of an interposed level of abstraction relative to characteristics of hardware, storage apparatus, scanning apparatus, and other specifics of preservation apparatus 18. Within preservation apparatus 18, aging or obsolete components could be replaced, redundant systems deployed, or internal workflow sequences re-vamped, all without impact on a customer at front end 12.

It can be readily appreciated that request handling/data routing preprocessor 24 preferably has access to substantial storage space, such as one or more large hard disks, to facilitate efficient transfer of large files by front end 12. Storage capacity would also allow buffering of preservation requests, including buffering of the data to be preserved.

Data processing element 26 receives and processes the input data that has been initially received and processed at request handling/data routing preprocessor 24. The primary output of data processing element 26 is processed data that is ready for imaging as the encoded, human-readable data record and is provided to writer 40. In a preferred embodiment, the output of data processing element 26 is rasterized data for driving writer 40.

In a preferred embodiment, data processing element 26 is a separate workstation computer configured to execute a suitable processing program for the input data. Alternately, such as for a small-scale preservation apparatus 18, the functions of data processing element 26 could also be performed by control logic processor 20 hardware. Or, the functions of request handling/data routing preprocessor 24 in front end 12 and data processing element 26 in preservation apparatus 18 could both be performed by a computer workstation that is separate from the computer workstation used as control logic processor 20.

Retrieval handling processor 60 may comprise a separate computer workstation configured to handle and process retrieval requests. Alternately, such as for a small-scale preservation apparatus 18, the functions of retrieval handling processor 60 could be performed by control logic processor 20 hardware.

### Networking Arrangements

Referring again to Figure 1, it can be appreciated that there are numerous possible configurations for interconnection of the various components of digital preservation system 10. In a preferred embodiment, for example, a high-speed Ethernet network serves as the interconnection infrastructure for digital preservation system 10. For optimum performance, front end 12 connects to preservation apparatus 18 using this high-speed connection.

Networking could also be used to connect individual processors within preservation apparatus 18 as well as within front end 12. With this arrangement, the individual computer workstations within preservation apparatus 18 that are configured as control logic processor 20, data processing element 26, and retrieval handling processor 60 can then be deployed at different locations, in a manner suitable for the scale and scope of digital preservation apparatus 18. For example, it is generally favorable to have data processing element 26 situated near writer 40; however, it may be preferable to locate other logic control components at a different location.

However, network topology is not limited to an Ethernet or local area networking (LAN) scheme. It may be advantageous, for example, to dispose writer 40 in a protected environment at another location. In such a case, component interconnection could employ any of a range of networking types, from high-end, high-speed dedicated telecommunications links to Internet connection, to dial-up modem connection, for example.

Networking also allows flexibility for growth in system capabilities and options. As one example, it may be of benefit for a system 10 to offer its customers the option of imaging using any one of a number of different technologies for imager 42. In an expanded, networked embodiment of the present invention, multiple sites for imager 42 are provided. At one site, silver-halide based microfilm in one size is imaged; another site prints encoded, human-readable data records onto a photosensitive medium using a dry process. Linked to both sites, a single data processing element 26 can then prepare the desired record in a suitable manner for the intended data preservation media format. Alternately, each site could employ its own data processing element 26.

In addition, networking also allows flexibility for growth in system scale. Using the networked system arrangement of the present invention, a system can be enlarged to comprise multiple writers 40, multiple sites providing physical storage apparatus 50, and a number of different data recovery processors 62.

### Preservation Request Handling

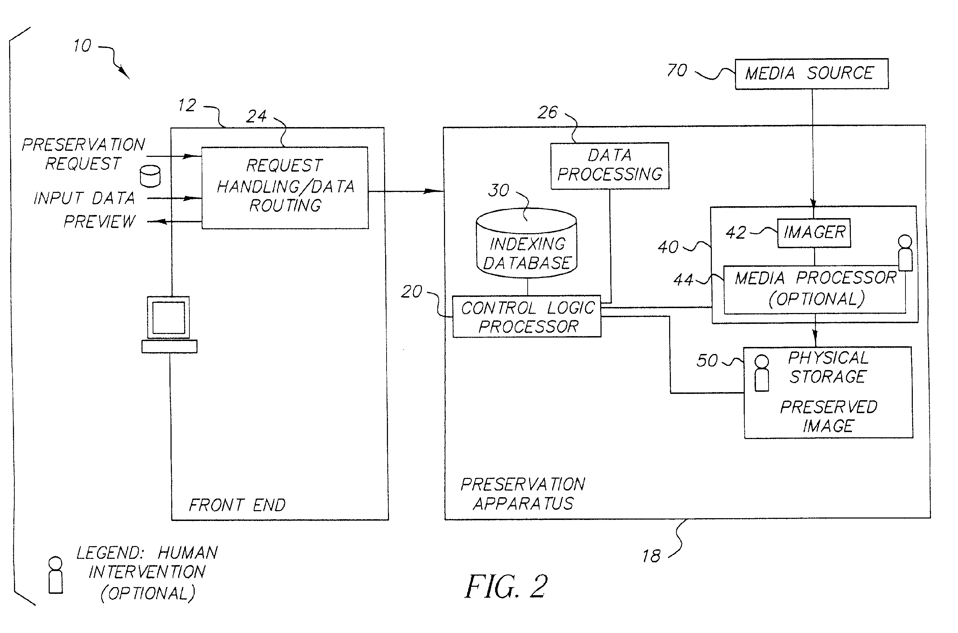

Referring to Figure 2, there is shown that portion of digital preservation system 10 that plays a primary role in the processing and preservation of digital data. It is instructive to describe in detail the various operations required for processing and data preservation using these components.

The preservation request at dedicated front end 12 may originate from any number of networked sources For example, request can be formatted and transmitted from a Web page or can be automatically generated by an external computer program. The preservation request itself must identify, at a minimum, the source of the preservation request and the source of the data to be preserved. The actual transfer of data may be initiated by the preservation request, to be executed by request handling/data routing preprocessor 24.

The data to be preserved as an encoded, human-readable data record can be any type of digital data that can be contained in a file or similar structure. Conventionally, scanned images can be preserved, following well-established models used for microfilm archival of documents. In addition to scanned image preservation, digital preservation system 10 also permits preservation of the source data used to represent a document or image. Thus, for example, a document prepared using desktop publishing software can be preserved not only in its final, published form (as an image) but also in its source form (as data). This arrangement would enable use of the data itself at a future date, simplifying revision of a preserved document, or re-use of a document, so that an earlier document could serve as a starting point for a later document.

Image data itself can comprise not only bit-mapped or byte-oriented image pixel data, but can also include other image-related information. Image-related information can include motion image data, animation sequence data, and image depth information, for example.

It must be emphasized that the preserved data need not represent a document or image, but could represent other data, such as machine code instructions. In this way, for example, a version of a computer program could be preserved as an encoded, human-readable data record, or raw data such as from a sensing instrument could be preserved in the same form as it was obtained.

Referring again to Figure 2, request handling/data routing preprocessor 24 obtains the data to be preserved from the input source, preprocesses this data, and provides the data to data processing element 26 in preservation apparatus 18. Preprocessing may be required, for example, to package the input data into a data format that can be accepted by preservation apparatus 18. In a preferred embodiment, a data record accepted for preservation by front end 12 is automatically converted into standard PDF format, a format that is familiar to those skilled in the data representation arts. A PDF file representing the data to be preserved is thereby created in request handling/data routing preprocessor 24 and is then passed to data processing element 26 in preservation apparatus 18. The primary function of data processing element 26 is to process the data to be preserved so that it is put into suitable rasterized form for writer 40.

### Types and Examples of Human-Readable Data Records

As has been pointed out above, conventional apparatus for data archiving largely focus on storing a document, the original data file for a document or application, or a bitmapped or other scanned or printable version of a document. By comparison, digital preservation system 10 provides an expanded set of tools for digital preservation and operates to provide methods of data preservation that are inherently longer-lasting, minimally dependent on computer platform hardware and on operating system and application software revisions.

Referring to Table 1, there is shown one example that compares the functions performed by digital preservation system 10 against functions of conventional data archival utilities. This example considers a file from a typical spreadsheet software package, Excel, from Microsoft Corporation. Conventional archival systems store the basic file that is generated and maintained by the application software, here the .xls file. In addition, conventional archiving may also store print output from such a program, in binary form, such as raw raster data, or as a file in a format intended for printing and distribution, such as a PDF file.

Preservation system 10 can also handle each type of data stored by the conventional system modeled in Table 1. However, with a goal of long-term data preservation, system 10 operates differently, as follows:
(a) Use of preservation-quality media. This provides long-term data preservation, with considerably more reliability and longer life-span than is possible with conventional magnetic or optical media.
(b) Encoded data in visual form. This minimizes dependence of the preserved data record on specific reading hardware or software. Ultimately, the preserved data could be scanned by any device that is able to scan ASCII characters or could even be read and decoded manually.
(c) Stored metadata is part of the preserved data record. The apparatus and method of the present invention preserve a metadata component along with the data record. This provides information on the preserved data record and its processing and helps to assure that the preserved data record can be interpreted in the future.
(d) Entry maintained in indexing database 30. This helps to maintain an online registry for access, security, and location of preserved data records.

It must be observed that the example shown in Table 1 depicts a simple case, wherein a single data file is preserved. Digital preservation system 10 is also well-suited to preservation of more complex files and file structures, such as files that comprise a Web site, related files used to compile and generate a commercial software application, or executable files containing encoded instructions, for example.

Digital preservation system 10 is also capable of preserving color reference information that is associated with a data record. Color reference information could include indexed color, references to color standards, such as the familiar PANTONE™ color standard that is published by Pantone, Inc. of Carlstadt, N.J., and bit-depth information, for example. Where the preservation medium is monochrome, color separations themselves can be preserved in grayscale form.

It must also be observed that, in addition to preserving data in human-readable form, digital preservation system 10 may also preserve additional information encoded in a format that is not human-readable. It may be advantageous, for example, to encode machine-readable information associated with a data record that facilitates data conversion or display, even if such a solution may be usable only in the short term. Strategies for determining which data representation formats are used will be based on factors such as anticipated use, obsolescence forecasting, and other considerations relevant to those who maintain and use digital preservation system 10.

**Table 1.**

| **Example Comparison of Conventional Archival vs. System 10 Preservation** | |
|---|---|
| **Conventional Archival** | **Digital Data Preservation** |
| Store file generated and maintained by application (.xls) file. File encoded onto magnetic or optical medium, in binary form. | Preserve file generated and maintained by application: (.xls) file. File encoded onto preservation medium in visual form (Base64 encoding). |
| | |
| Store application print output as scanned raster file, in binary form. | Preserve application print output as scanned raster image on preservation medium. |
| | |
| Store application output as printable format (.pdf) file, in binary form. | Preserve application output as printable format (.pdf) file. File encoded onto preservation medium in visual form (Base64 encoding). |
| | |
| -- | Preserve metadata about the file. File encoded onto preservation medium in visual form, using extensible markup language. |
| -- | Store index entry corresponding to file, in standard database. (Optionally, also preserve database on preservation media.) |

### Indexing Database 30

As part of its processing of a preservation request, data processing element 26 also generates an entry to an indexing database 30. Indexing database 30 stores key information concerning each data record that is preserved by digital preservation system 10. This information includes the data needed to organize and track preserved data and to access a specific encoded data record once it has been preserved.

Indexing database 30 may employ any of a number of types of conventional database software and storage hardware. In a preferred embodiment, indexing database 30 uses a relational database provided by Oracle Software from Oracle Corporation, Redwood Shores, CA. Indexing database 30 may use the hardware resources of a separate computer workstation or may use hardware resources resident on control logic processor 20. As yet another alternative, indexing database 30 may be a hierarchical database. In any embodiment, indexing database 30 would allow customization of indexing services, such as by customer or user account, for example.

Indexing database 30 is routinely backed up, using standard practices for database backup as recommended by providers of database software. Typically, backup for a database of this type employs magnetic tape storage or other high-density storage medium.

In addition to the standard backup practices, indexing database 30 can itself be preserved by digital preservation system 10, in whole or in part, as an encoded, human-readable data record.

### Writer 40

Digital preservation system 10 allows the use of one or more writers 40 for performing the imaging operation that writes encoded data records onto preservation media. As shown in Figures 1 and 2, writer 40 components include imager apparatus 42 which typically provides some form of exposure energy for imaging onto raw media 72. Then, depending on the type of imager apparatus 42 used, media processor 44 may be required for development of the final record.

Writer 40 may comprise a high-resolution, high-volume microfilm apparatus such as a Document Archive Writer, Model 4800, manufactured by Eastman Kodak Company, Rochester, New York, for example. Such devices use light exposure in order to image onto cassette-fed film, which is then developed by media processor 44. Other types of writer 40 could employ imaging technologies for which no media processor 44 is necessary, such as laser thermal imaging, for example. Light exposure sources used in imager apparatus 42 could include one or more lamps, LEDs, organic LEDs (OLEDs), lasers, and other sources, and could also make use of light-modulating array elements such as grating light valves, liquid-crystal displays (LCDs), and digital micromirror devices (DMDs). Images could be written in bitonal, half-tone grayscale, or continuous-tone grayscale form. Where human-readable preservation medium 210 is monochrome, color separations themselves can be preserved in grayscale form.

As is represented in Figure 1, operator intervention may be required for loading and maintaining writer 40 and for operating media processor 44 if needed.

Preservation media for encoded data record preservation, provided to writer 40 as raw media 72, can be any of the media types specifically designed for maintaining image quality over the long term required for preservation use. Exemplary film types for preservation media include the KODAK Archive Storage Media 3459, manufactured by Eastman Kodak Company, Rochester, New York. It should be noted that preservation media could include color or monochrome media and might also include media types not employing silver-halide sensitometry.

### Physical Storage Apparatus 50

Physical storage apparatus 50 provides secure storage for encoded, human-readable data records written onto preservation media, providing conditions most suitable for long-term preservation with minimal image deterioration. In a preferred embodiment, physical storage apparatus 50 comprises a climate-controlled room arranged to allow manual access to preserved materials. However, more elaborate automated systems and equipment could be employed for physical storage apparatus 50, reducing support labor costs and allowing control logic commands to direct filing and retrieval operations on the preserved encoded data records themselves.

### Retrieval Request Handling

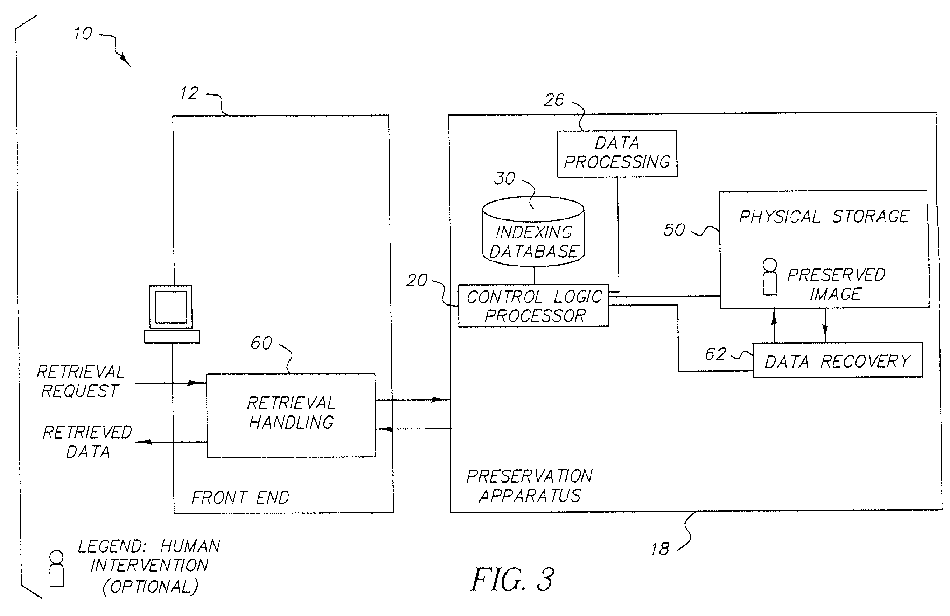

Referring to Figure 3 there is shown that portion of digital preservation system 10 that plays a role in the retrieval of digital data preserved as encoded data records.

The retrieval request may originate at a dedicated terminal at front end 12 or may come to front end 12 from any number of networked sources. For example, a retrieval request can be formatted and transmitted from a Web page or automatically generated by an external computer program. The retrieval request must provide a minimum amount of information, identifying the source of the request and the data to be retrieved. The retrieval request must also include security and password information, so that preserved data is made available only to authorized parties.

Retrieval handling processor 60 accepts the retrieval request and forwards request data to control logic processor 20. Control logic processor 20 interacts with indexing database 30 to validate the request and to identify the location of the preserved encoded data record(s). Control logic processor 20 then processes the request, in conjunction with a data recovery processor 62, to obtain the requested data from physical storage apparatus 50. As Figure 3 shows, human intervention may be required for retrieval request processing as well as for access to physical storage 50. Automated access to preserved data records may alternately be implemented.

The response of data recovery processor 62 to the retrieval request depends on variables specified in the request itself. For example, a retrieval request may only specify that a record be printed or displayed for the requested data record. In such a case, it may be sufficient to reproduce an image using optical printing methods, as is currently performed for many types of microfilm equipment. Alternately, a retrieval request may require that data be obtained from the preserved, encoded data record. In a preferred embodiment, data recovery processor 62 includes a scanner for scanning the human-readable encoded data from the preserved data record and providing, as output, the binary data that was originally preserved.

The preserved data must be extracted from the preservation media and provided, in suitable form, to the initiator of the request. Data recovery processor 62 extracts the digital data from the encoded, human-readable data record, processes the retrieved metadata, and provides the data in a suitable output form. For images and documents, for example, data recovery processor 62 may provide a display or print version of the preserved file. Alternately, a digital data file can be generated from the encoded data record.

Data recovery processor 62 may comprise, for example, a Kodak Digital Science Intelligent Microimage Scanner for obtaining an image from microfilm. Other types of scanners, including Optical Character Recognition (OCR) systems could also be employed as components of data recovery processor 62.

Data recovery processor 62 may also perform any of a number of post-processing operations for a retrieved image, making use of information contained in the retrieved metadata. As was described above for preprocessing, the post-processing operations are also benign, not changing data content, but rather adapting the retrieved image to the display or printing requirements of an output device.

Given access to sufficient storage resources, retrieval handling processor 60 could perform buffering operations for retrieved data records.

### Data Encoding

In the data preservation operation described above, digital preservation system 10 stores two types of data:
(a) Input digital data received from the original preservation request; and
(b) Additional metadata that includes information about the data when it is preserved.

As is noted in the earlier part of this disclosure, input digital data may be processed, by request handling/data routing processor 24, to enhance image quality and readability. In addition, request handling/data routing processor 24 also provides metadata concerning the encoded data record. Here, this is additional data that describes the input digital data and describes how the input digital data has been processed. Metadata may also include information such as storage and use data, originator and preservation date, how the data was generated, image quality parameters, color reference, writer and media characteristics, and data format information. As an example, and not by way of limitation, Table 2 lists typical metadata fields for a digital data record managed using the digital preservation system 10 of the present invention.

The metadata associated with a preserved data record can be provided in a number of formats. In the preferred embodiment, the preserved data record itself is packaged along with its associated metadata and is stored as a file using Extensible Markup Language, or XML. XML is an open data representation format that has been developed to standardize and simplify the task of transferring data files from one type of computer system or software to another. This language is termed "extensible" because, while it includes only a minimum of rules and definitions for data markup, the file has an associated data dictionary. The associated data dictionary can be defined using an XML Schema or using a DTD (Document Type Description). An XML Schema defines the structural organization and content data type of the data elements within a file. A DTD only defines the structural organization of the data elements within the file. XML fields are encoded using UTF-8 or ASCII format, allowing widespread readability of metadata contents of the file itself. A metadata wrapper referred to as base64Binary is provided around binary or machine-encoded data. The base64Binary uses a Base64 Content-Transfer-Encoding to enclose this binary data as a character string within the larger framework of XML.

Because XML files are extensible and because, with the use of XML Schema or DTD, the fields are self-defined, the XML data format provides an ideal data encoding solution for file preservation. As a result of inherent self-definition, an XML file and its associated XML Schema or DTD are designed to withstand obsolescence. XML itself is designed such that even future versions of XML are required to conform to a basic set of rules that allow readability of any XML file in a consistent format.

XML format allows any number of different encoding schemes for a data record, using ASCII characters. This adds flexibility for digital data preservation. A two-dimensional image, for example, could be encoded by converting bitmap or source image data to XML format. Data recovery processor 62 could then offer appropriate options for viewing or printing the image or for distribution of the preserved data file itself.

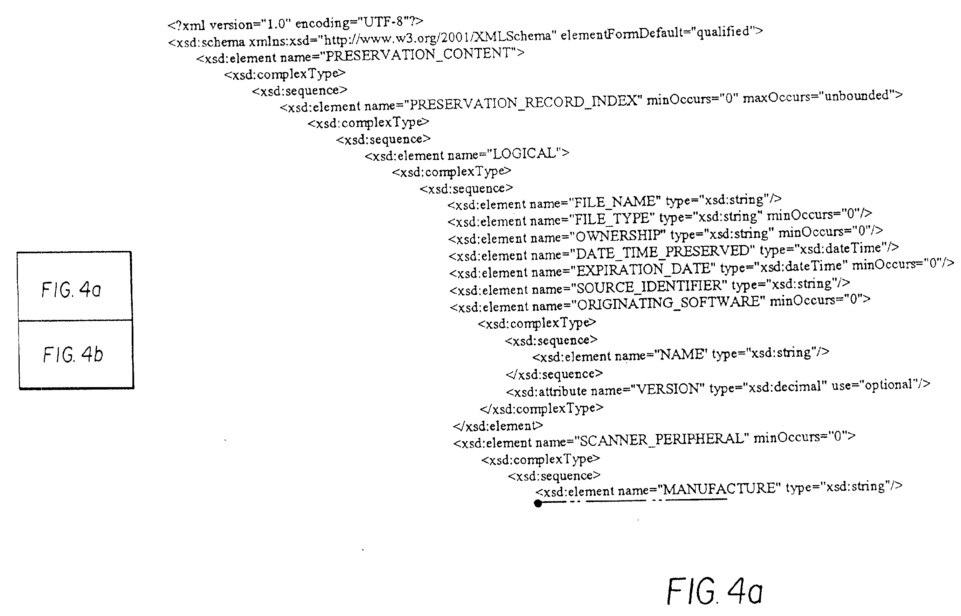

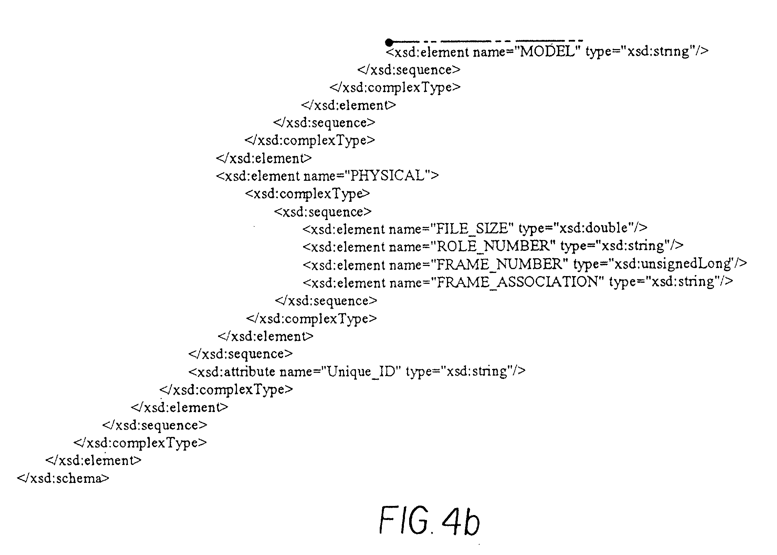

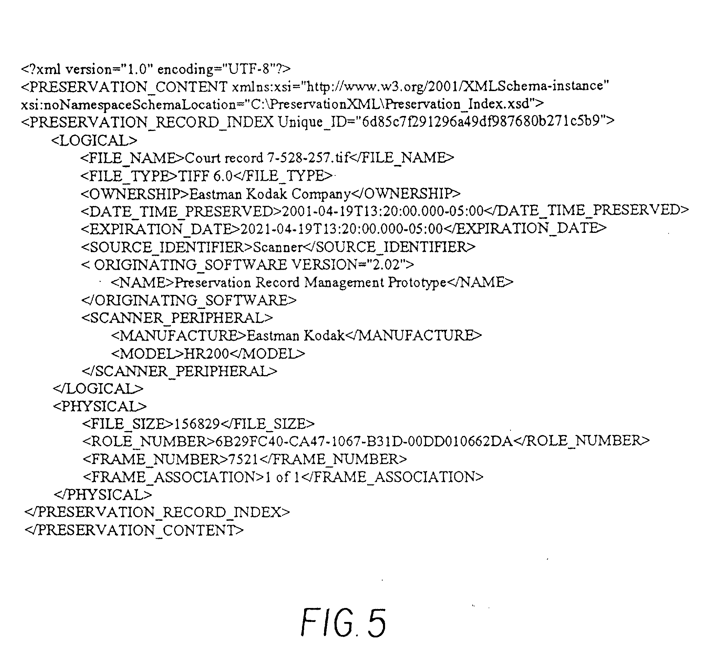

Referring to Figure 4, there is shown an abbreviated example of an XML Schema. Referring to Figure 5, there is shown an abbreviated example of a preserved data file represented in XML format.

It is instructive to note that digital data preservation system 10 would also preserve specifications that describe the metadata. For example, for XML-based metadata, the following specifications would be preserved, available for access in retrieval of any preserved document:
(a) Extensible Markup Language specification, including each published version and edition;
(b) XML Schema Part 0: Primer;
(c) XML Schema Part 1: Structures;
(d) XML Schema Part 2: Datatypes.

### Data Expungement

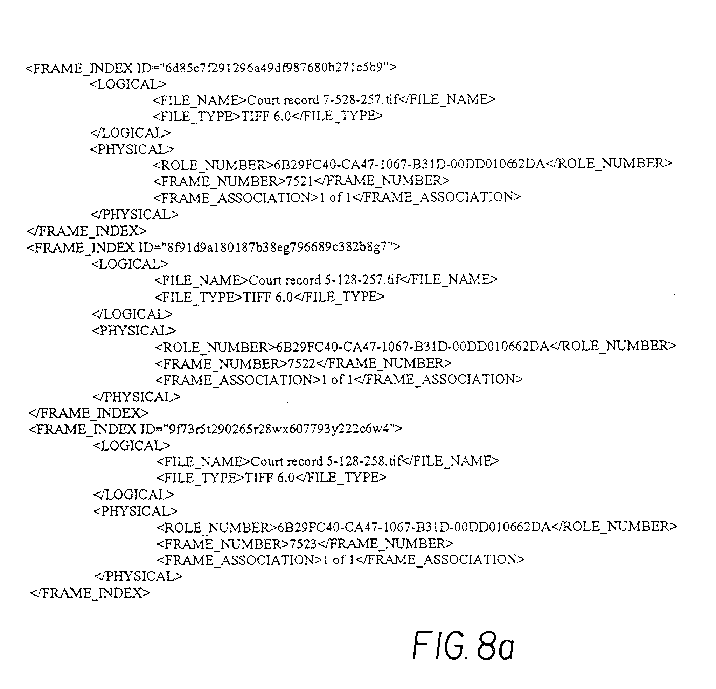

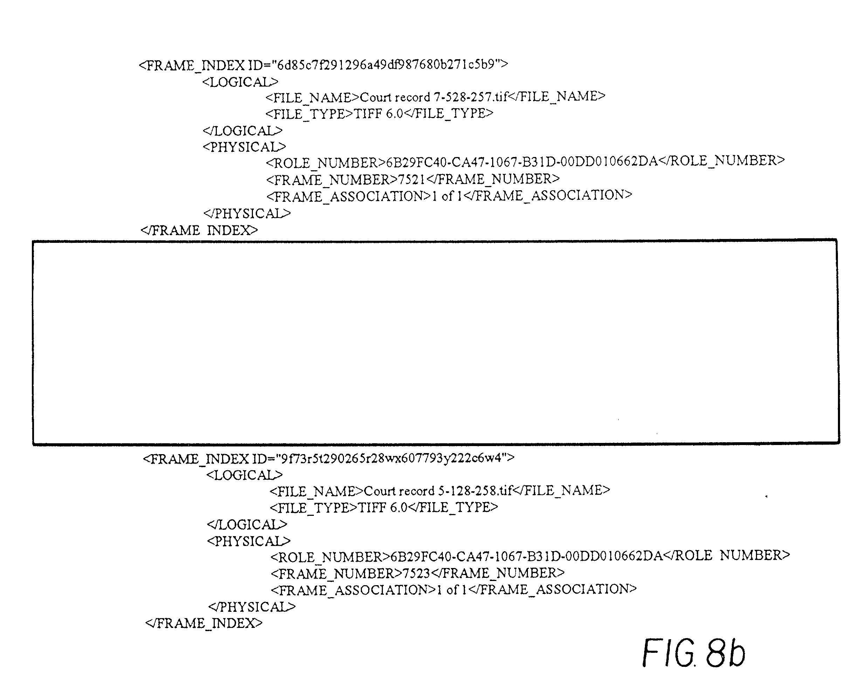

Controlled, systematic data expungement is an important function provided by digital data preservation system 10. For complete expungement both types of data records must be either deleted or rendered unreadable, that is, both:
(a) Preserved digital data records; and
(b) Metadata records that are associated with the preserved data records.
Following successful expungement, there must be no way to recreate or interpret the expunged data records. Figures 8a and 8b illustrate expungement of a single data record in the XML encoding used in the preferred embodiment of the present invention.

The XML-based metadata arrangement uses the inherent sequential data model of XML. This model allows the removal of one or more data elements while maintaining the integrity of neighboring data. In Figure 8a, three FRAME_INDEX data elements are preserved. Removal of the middle FRAME_INDEX data element can be performed without impact to the two remaining data elements, as is shown in Figure 8b.

Depending on the requirements at a site, expungement activity may be recorded in indexing database 30.

For expungement from the preservation medium itself, various methods may be employed, as long as the data to be expunged can be accurately located and successful expungement can be verified. For example, one expungement method would be to overwrite the photosensitive medium using a high-energy source, such as laser ablation. Alternately, a stylus could be used to remove a local segment of a layer of medium containing the preserved information. Or, sections of the preservation medium itself could simply be removed and destroyed. Other erasure methods could use localized bleach or ink application. As yet another method, an entire roll of preservation media could be re-written, omitting the expunged information.

Expungement activity could be controlled automatically by control logic processor 20 in order to conform with records retention and management policies of different customers.

The invention has been described in detail with particular reference to certain preferred embodiments thereof, but it will be understood that variations and modifications can be effected within the scope of the invention as described above, and as noted in the appended claims, by a person of ordinary skill in the art without departing from the scope of the invention.

Thus, what is provided is a digital preservation system for long-term preservation of data on digital media.

**Table 2.**

| **Exemplary Metadata Fields for Preserved Digital Data File** | |
|---|---|
| **XML Schema and XML Element Name** | **Description** |
| PRESERVATION_RECORD_INDEX Unique_ID | Each Preservation record is defined to have a Globally Unique Identifier that is a GUID. |
| FILE_NAME | The name of a preserved file. |
| FILE_TYPE | General description of the file and therefore the data type. |
| OWNERSHIP | Defines the client company or organization who owns the preserved data content. |
| DATE_TIME_PRESERVED | The instance in time when the data was preserved. The data has the following syntax: YYYY-MM-DDThh:mm:ss.sss+or- hh:mm Where: YYYY - the year; MM - the month DD - the day of the Month hh - the hour in 24 hour designation mm - the minute of the hour s s.sss - the second of the minute + or - hours ahead or behind Co-Ordinated Universal Time |
| EXPIRATION_DATE | The time instance when the preserved information shall be removed from the preservation system. |
| SOURCE_IDENTIFIER | Identifies the data source of the preserved data. |
| ORIGINATING_SOFTWARE VERSION | Identifies the version of the originating software. |
| ORIGINATING_SOFTWARE NAME | Identifies the name of the originating software. |
| SCANNER_PERIPHERAL MANUFACTURE | Identifies the scanner manufacture. |
| SCANNER_PERIPHERAL MODEL | Identifies the scanner model. |
| FILE_SIZE | Identifies the size, in bytes, of the preserved file. |
| ROLE_NUMBER | The role of preservation media is uniquely identified using a UUID (Universally Unique Identified). |
| FRAME_NUMBER | Identifies the preservation frame number where the preserved data is stored. |
| FRAME_ASSOCIATION | Identifies the preservation frame or frames associated with the data record. |

## Claims

1. A system for long-term preservation of a data record, the system comprising:
(a) an input handler for accepting a preservation request to preserve said data record, for accepting input metadata associated with said data record to form a metadata record, and for conversion of said data record and said metadata record to generate a formatted data record;
(b) a data processor for accepting said formatted data record, for generating an index entry corresponding to said formatted data record, and for encoding, from said formatted data record, a print file;
(c) a preservation medium for recording said print file for long-term preservation;
(d) a writer for marking said print file onto said preservation medium to form a human-readable preserved data record;
(e) an indexing database for storing said index entry from said data processor corresponding to said human-readable preserved data record; and
(f) a storage apparatus for safekeeping of said human-readable preserved data record.

2. The system of claim 1 further comprising:
(g) a retrieval handler for accepting a retrieval request for said human-readable preserved data record and, according to said retrieval request, for obtaining said index entry and for providing an instruction for retrieval of said human-readable preserved data record from said storage apparatus; and
(h) a data recovery apparatus for obtaining, from said human-readable preserved data record, said data record and said input metadata record.

3. The system of claim 1 wherein said human-readable preserved data record is encoded according to an extensible markup language.

4. The system of claim 3 wherein said extensible markup language is XML.

5. The system of claim 1 wherein said data record encodes an image.

6. The system of claim 5 wherein said image comprises a color separation.

7. The system of claim 5 wherein said image is in grayscale form.

8. The system of claim 1 wherein said data record encodes audio.

9. The system of claim 1 wherein said data record encodes numerical data.

10. The system of claim 1 wherein said data record encodes motion image data.

11. The system of claim 1 wherein said data record encodes animation image data.

12. The system of claim 1 wherein said data record encodes image depth data.
